# EUROPÄISCHE PATENTANMELDUNG

(11) **EP 1 564 476 A1**
(43) Veröffentlichungstag der Anmeldung: **17.08.2005**
(21) Anmeldenummer: 04016361.0
(22) Anmeldetag: 12.07.2004
(51) Int. Cl.: F17C 1/00, F17C 11/00, F17C 13/08, H01M 8/02

(54) **Externe Tankpatrone mit Sicherheitsschnittstelle**

(71) Anmelder: SFC Smart Fuel Cell AG, 85649 Brunnthal-Nord (DE)
(72) Erfinder: Müller, Jens, Dr, 81827 München (DE); Stefener, Manfred, 81827 München (DE)
(74) Vertreter: Grünecker, Kinkeldey, Stockmair & Schwanhäusser Anwaltssozietät

(57) **Zusammenfassung**

Die Erfindung betrifft eine Tankpatrone für ein Brennstofffluid zum externen Anschließen an ein Gerät mit einer Brennstoffzelleneinrichtung, umfassend: wenigstens eine Tankpatronen-Fluidschnittstelle, die mit wenigstens einer Geräte-Fluidschnittstelle des Geräts koppelbar ist, und derart ausgebildet ist, dass im Kopplungszustand eine Fluidverbindung zwischen der Tankpatrone und der Brennstoffzelleneinrichtung realisiert ist, so dass die Brennstoffzelleneinrichtung mit Brennstofffluid aus der Tankpatrone versorgt werden kann, und wenigstens eine Tankpatronen-Halteschnittstelle, die mit wenigstens einer Geräte-Halteschnittstelle des Geräts koppelbar ist, und derart ausgebildet ist, dass im kopplungszustand eine Halteverbindung zwischen der Tankpatrone und dem Gerät realisiert ist, so dass die Tankpatrone extern am Gerät gehalten wird. Die Erfindung betrifft weiterhin ein Gerät mit einer Brennstoffzelleneinrichtung, an das eine Tankpatrone mit einem Brennstofffluid extern anschließbar ist, umfassend: wenigstens eine Geräte-Fluidschnittstelle, die mit wenigstens einer Tankpatronen-Fluidschnittstelle der Tankpatrone koppelbar ist, und derart ausgebildet ist, dass im Kopplungszustand eine Fluidverbindung zwischen der Tankpatrone und der Brennstoffzelleneinrichtung realisiert ist, wodurch die Brennstoffzelleneinrichtung mit Brennstofffluid aus der Tankpatrone versorgt werden kann, und wenigstens eine Geräte-Halteschnittstelle, die mit wenigstens einer Tankpatronen-Halteschnittstelle der Tankpatrone koppelbar ist, und derart ausgebildet ist, dass im Kopplungszustand eine Halteverbindung zwischen der Tankpatrone und dem Gerät realisiert ist, wodurch die Tankpatrone extern am Gerät gehalten wird.

## Beschreibung

### Gebiet der Erfindung

Die Erfindung betrifft eine Tankpatrone für ein Brennstofffluid zum externen Anschließen an ein Gerät mit einer Brennzoffzelleneinrichtung. Die Erfindung betrifft weiterhin ein Gerät mit einer Brennstoffzelleneinrichtung, an das eine Tankpatrone mit einem Brennstofffluid extern anschließbar ist

### Stand der Technik

Brennstoffzellen mit austauschbarer Tankpatrone als Stromquellen für tragbare elektronische Geräte sind aus dem Stand der Technik bekannt. Häufig wird dabei die Tankpatrone zum Anschluss in einen Patronenschacht eingeschoben, so dass zumindest ein Teil der Patrone in dem Gerät verschwindet. Andere Konzepte sehen vor, dass die Tankpatrone von außen an das Gerät angeschlossen wird, ohne von diesem aufgenommen zu werden.

Bei den bekannten Lösungen der Art und Weise, wie Tankpatronen an ein Brennstoffzellensystem angeschlossen werden, bestehen die folgenden erheblichen Probleme.

Wird eine Tankpatrone ganz oder teilweise in ein Gerät eingeführt, muss das entsprechende Volumen in diesem Gerät dafür freigehalten werden und steht damit nicht für andere Komponenten zur Verfügung. Das Gerät ist dadurch erheblich größer als notwendig. Diese Lösung hat also den Nachteil, dass eine zumindest teilweise intern angeordnete Tankpatrone bei Geräten mit starkem Miniaturisierungszwang, wie etwa bei tragbaren Computern, aufgrund der dafür notwendigen Platzreservierung für die Tankpatrone, unvorteilhaft ist.

Hinzu kommt, dass bei zumindest teilweise intern angeordneten Tankpatronen die Form der Tankpatrone und die räumlichen Gegebenheiten der dazu benachbarten Komponenten in dem Gerät aufeinander abgestimmt werden müssen. Die meisten Komponenten sind mehr oder weniger quaderförmig oder zumindest durch ebene Flächen begrenzt. Rundliche Tankpatronen, z.B. zylinderförmige oder mit stark abgerundeten Kanten und Ecken versehene Tankpatronen, führen deshalb zu einer Verschwendung von knappem Bauraum im Gerät. Dies liegt daran, dass bei rundlichen Tankpatronen sichelförmige Räume entstehen, deren Nutzung in der Regel kaum möglich ist. Ein Verwendung von eckigen bzw. quaderförmigen Tankpatronen ist jedoch aus anderen Gründen nachteilig. Zum einen gibt es einen technischen Nachteil, da eckige Tankpatronen unter einer Druckbelastung instabiler sind, und zum anderen gibt es Marketingnachteile von eckigen Tankpatronen, die im Allgemeinen als weniger ästhetisch angesehen werden. Es lässt sich somit feststellen, dass rundliche interne Tankpatronen bei Geräten mit starker Miniaturisierung nachteilig sind und eckige oder quaderförmige Tankpatronen Stabilitäts- und Akzeptanznachteile mit sich bringen.

Interne Tankpatronen haben an sich den Nachteil, dass eine Beschränkung auf eine vorbestimmte Größe und damit auch auf ein vorbestimmtes Volumen erfolgt. Dadurch ist es nicht möglich, flexibel und anforderungsbedingt verschiedene Größen von Tankpatronen mit dem Gerät zu verwenden. Dies kann aber durchaus erwünscht oder sogar erforderlich sein. Die ist nur mit externen Tankpatronen möglich. Z.B. kann im Fall eines tragbaren Computers bei kurzen mobilen Einsätzen eine kleine Tankpatrone verwendet werden, jedoch kann etwa bei einem langen Dauereinsatz eine größere Tankpatrone wünschenswert oder notwendig sein. Andererseits kann mit einer extern anschließbaren Tankpatrone bei einem Einsatz zu Hause oder am Arbeitsplatz eine kleine Adapterpatrone eingesetzt werden, die sehr wenig Raum in Anspruch nimmt, und die über eine Zuleitung mit einem größeren stationären Brennstoffreservoir verbunden ist.

Im Fall von externen Tankpatronen ist jedoch derzeit die Frage der Zuverlässigkeit ungelöst. Beispielsweise können beim Herunterfallen eines Geräts mit einer externen Tankpatrone große Hebelkräfte über die Tankpatrone an der Schnittstelle zwischen Tankpatrone und Gerät angreifen und diese beschädigen oder zerstören. Dadurch kann es weiterhin zu einem möglicherweise gefährlichen Austreten von Brennstoffflüssigkeit kommen. Aufgrund dessen sind externe Tankpatronen gemäß dem Stand der Technik unter Sicherheitsaspekten nicht akzeptabel.

### Beschreibung der Erfindung

Angesichts der Nachteile des Stands der Technik, liegt der Erfindung das Problem zugrunde, eine externe Tankpatrone zur Verfügung zu stellen, die eine erhebliche Volumeneinsparung im Gerät mit sich bringt und die außen am Gerät angeschlossen wird.

Das zuvor genannte Problem wird gelöst durch eine erfindungsgemäße Tankpatrone für ein Brennstofffluid zum externen Anschließen an ein Gerät mit einer Brennstoffzelleneinrichtung, umfassend: wenigstens eine Tankpatronen-Fluidschnittstelle, die mit wenigstens einer Geräte-Fluidschnittstelle des Geräts koppelbar ist, und derart ausgebildet ist, dass im Kopplungszustand eine Fluidverbindung zwischen der Tankpatrone und der Brennstoffzelleneinrichtung realisiert ist, so dass die Brennstoffzelleneinrichtung mit Brennstoffiluid aus der Tankpatrone versorgt werden kann, und wenigstens eine Tankpatronen-Halteschnittstelle, die mit wenigstens einer Geräte-Halteschnittstelle des Geräts koppelbar ist, und derart ausgebildet ist, dass im Kopplungszustand eine Halteverbindung zwischen der Tankpatrone und dem Gerät realisiert ist, so dass die Tankpatrone extern am Gerät gehalten wird.

Das genannte Problem wird weiterhin gelöst durch ein Gerät mit einer Brennstoffzelleneinrichtung, an das eine Tankpatrone mit einem Brennstofffluid extern anschließbar ist, umfassend: wenigstens eine Geräte-Fluidschnittstelle, die mit wenigstens einer Tankpatronen-Fluidschnittstelle der Tankpatrone koppelbar ist, und derart ausgebildet ist, dass im Kopplungszustand eine Fluidverbindung zwischen der Tankpatrone und der Brennstoffzelleneinrichtung realisiert ist, wodurch die Brennstoffzelleneinrichtung mit Brennstofffluid aus der Tankpatrone versorgt werden kann, und wenigstens eine Geräte-Halteschnittstelle, die mit wenigstens einer Tankpatronen-Halteschnittstelle der Tankpatrone koppelbar ist, und derart ausgebildet ist, dass im Kopplungszustand eine Halteverbindung zwischen der Tankpatrone und dem Gerät realisiert ist, wodurch die Tankpatrone extern am Gerät gehalten wird.

Eine erfindungsgemäße Tankpatrone zeichnet sich dadurch aus, dass sie wenigstens eine Tankpatronen-Fluidschnittstelle umfasst, die mit wenigstens einer Geräte-Fluidschnittstelle des Geräts koppelbar ist, und derart ausgebildet ist, dass im Kopplungszustand eine Fluidverbindung zwischen der Tankpatrone und der Brennstoffzelleneindchtung realisiert ist. Dadurch kann die Brennstoffzelleneinrichtung mit Brennstofffluid aus der Tankpatrone versorgt werden.

Eine erfindungsgemäße Tankpatrone zeichnet sich weiterhin dadurch aus, dass sie wenigstens eine Tankpatronen-Halteschnittstelle umfasst, die mit wenigstens einer Geräte-Halteschnittstelle des Geräts koppelbar ist, und derart ausgebildet ist, dass im Kopplungszustand eine Halteverbindung zwischen der Tankpatrone und dem Gerät realisiert ist. Dadurch wird die Tankpatrone extern am Gerät gehalten.

Das erfindungsgemäße Gerät mit einer Brennstoffzelleneinrichtung, an die eine Tankpatrone mit einem Brennstofffluid extern anschließbar ist, zeichnet sich aus durch wenigstens eine Geräte-Fluidschnittstelle, die mit wenigstens einer Tankpatronen-Fluidschnittstelle der Tankpatrone koppelbar ist, und derart ausgebildet ist, dass im Kopplungszustand eine Fluidverbindung zwischen der Tankpatrone und der Brennstoffzelleneinrichtung realisiert ist, wodurch die Brennstoffzelleneinrichtung mit Brennstofffluid aus der Tankpatrone versorgt werden kann. Auf diese Weise wird im Kopplungszustand der Tankpatrone und des Geräts eine Fluidverbindung hergestellt, so dass der Brennstoffzelleneinrichtung Brennstofffluid aus der Tankpatrone zugeführt werden kann.

Das erfindungsgemäße Gerät mit einer Brennstoffzelleneinrichtung, an die eine Tankpatrone mit einem Brennstofffluid extern anschließbar ist, zeichnet sich weiterhin aus durch wenigstens eine Geräte-Halteschnittstelle, die mit wenigstens einer Tankpatronen-Halteschnittstelle der Tankpatrone koppelbar ist, und derart ausgebildet ist, dass im Kopplungszustand eine Halteverbindung zwischen der Tankpatrone und dem Gerät realisiert ist, wodurch die Tankpatrone extern am Gerät gehalten wird. Auf diese Weise wird die Tankpatrone extern am Gerät gehalten.

Die Fluidschnittstellen und die Halteschnittstellen an der Tankpatrone und am Gerät sind im Sinne des Konzepts von "Stecker - Steckdose" komplementär zueinander, so dass sie jeweils gemeinsam wirken.

Die zuvor genannte Tankpatrone kann wie im Folgenden beschrieben weitergebildet werden.

Eine Weiterbildung der Tankpatrone besteht darin, dass die Tankpatronen-Halteschnittstelle so ausgebildet ist, dass sich die Halteverbindung bei einer vorbestimmten relativen Kraftwirkung zwischen der wenigstens einen Tankpatronen-Halteschnittstelle und der wenigstens einen Geräte-Halteschnittstelle löst. Das hat den Vorteil, dass die vorbestimmte relative Kraftwirkung so bemessen werden kann, dass eine Beschädigung und/oder Zerstörung des Geräts und/oder der Tankpatrone und/oder der Schnittstellen bei einer Krafteinwirkung auf die Tankpatrone vermieden wird. Eine solche Krafteinwirkung kann etwa auftreten, wenn ein Gerät mit angeschlossener Tankpatrone herunterfällt und beispielsweise mit der Tankpatrone auf den Boden auftrifft, wodurch es zu einer großen Belastung der Schnittstellen durch Hebelkräfte kommt. Ein Lösen der Halteverbindung verhindert etwaige Beschädigungen.

Eine andere Weiterbildung der Tankpatrone besteht darin, dass die Tankpatronen-Fluidschnittstelle so ausgebildet ist, dass sie in einem ungekoppelten Zustand fluiddicht verschlossen ist. Dies hat den Vorteil, dass das Bennstofffluid nicht austritt, wenn die Tankpatrone nicht an das Gerät gekoppelt ist, insbesondere auch dann wenn sie unabsichtlich vom Gerät getrennt wird.

Eine andere Weiterbildung der Tankpatrone besteht darin, dass die wenigstens eine Tankpatronen-Fluidschnittstelle integral mit der wenigstens einen Tankpatronen-Halteschnittstelle ausgebildet ist. Dadurch können die Tankpatronen-Fluidschnittstelle und die Tankpatronen-Halteschnittstelle als Einheit ausgebildet sein, so dass eine kompakte Anordnung erzielt werden kann, was insbesondere auch für kleine Tankpatronen vorteilhaft eingesetzt werden kann.

Eine andere Weiterbildung der Tankpatrone besteht darin, dass sie weiterhin wenigstens eine Tankpatronen-Elektronikschnittstelle umfasst, die mit wenigstens einer Geräte-Elektronikschnittstelle koppelbar ist, und derart ausgebildet ist, dass im Kopplungszustand elektrische Verbindungen zwischen der Tankpatrone und dem Gerät und/oder der Brennstoffzelleneinrichtung bestehen. Auf diese Weise können zum Einen Informationen zwischen der Tankpatrone und dem Gerät und/oder der Brennstoffzelleneinrichtung ausgetauscht werden. Solche Informationen können etwa den Füllstand der Tankpatrone betreffen. Zum Anderen kann aber auch eine möglicherweise in der Tankpatrone vorhandene Pumpeinrichtung mit Strom versorgt werden.

Eine andere Weiterbildung der Tankpatrone besteht darin, dass die wenigstens eine Tankpatronen-Elektronikschnittstelle integral mit der wenigstens einen Tankpatronen-Fluidschnittstelle und/oder der wenigstens einen Tankpatronen-Halteschnittstelle ausgebildet ist. Dadurch können die Tankpatronen-Elektronikschnittstelle und die wenigstens eine Tankpatronen-Fluidschnittstelle und/oder die wenigstens eine Tankpatronen-Halteschnittstelle als Einheit ausgebildet sein, so dass eine kompakte Anordnung erzielt werden kann, was insbesondere auch für kleine Tankpatronen vorteilhaft eingesetzt werden kann.

Eine andere Weiterbildung der Tankpatrone besteht darin, dass die Halteverbindung zwischen der Tankpatrone und dem Gerät durch mechanische und/oder magnetische Kräfte realisiert ist. Auf diese Weise kann die Halteverbindung einfach realisiert werden, indem etwa durch mechanisches Einrasten der Tankpatronen-Halteschnittstelle mit der Geräte-Halteschnittstelle eine Kopplung hergestellt wird. Eine andere Möglichkeit ist die Realisierung der Halteverbindung durch magnetische Kräfte.

Eine andere Weiterbildung der Tankpatrone besteht darin, dass die Tankpatrone eine abgerundete, vorzugsweise eine im Wesentlichen zylindrische, äußere Form hat oder/und eine auch ebene Flächen umfassende äußere Form hat, bei der die Übergänge zwischen den Flächen erheblich abgerundet sind. Dies hat den Vorteil, dass die Tankpatrone durch äußere Kräfte und innere Druckkräfte im Wesentlichen gleichmäßig belastet wird. Im Gegensatz dazu können bei an Kanten oder Ecken angreifenden Kräften lokal sehr hohe Belastungen auftreten, die möglicherweise zu einer Beschädigung der Tankpatrone führen könnte. Diese Gefahr wird durch die erfindungsgemäße Formgebung der Tankpatrone erheblich verringert.

Eine andere Weiterbildung der Tankpatrone besteht darin, dass die im Wesentlichen zylindrische Tankpatrone derart an das Gerät angeschlossen werden kann, dass sie im Wesentlichen waagerecht oder im Wesentlichen senkrecht zur Standfläche des Geräts ist, vorzugsweise zwischen diesen Positionen drehbar ist, und/oder dass sie direkt am Gerät anliegt oder ein Freiraum zwischen Tankpatrone und Gerät besteht. Dies hat den Vorteil, dass die Tankpatrone je nach Bedarf waagerecht oder senkrecht angeordnet werden kann. Weiterhin kann dadurch die Tankpatrone vorzugsweise flexibel in die eine oder andere Position gebracht werden. Darüber hinaus kann die Tankpatrone direkt am Gerät anliegen und somit zusätzlich stabilisiert werden oder es kann ein Freiraum vorhanden sein, um z.B. eine Luftströmung zur Kühlung zu erleichtem.

Das zuvor genannte erfindungsgemäße Gerät kann wie im Folgenden beschrieben weitergebildet werden.

Eine Weiterbildung des Geräts besteht darin, dass die Geräte-Halteschnittstelle so ausgebildet ist, dass sich die Halteverbindung bei einer vorbestimmten relativen Kraftwirkung zwischen der wenigstens einen Tankpatronen-Halteschnittstelle und der wenigstens einen Geräte-Halteschnittstelle löst. Dadurch kann ein Lösen der Halteverbindung bei übermäßiger Krafteinwirkung erfolgen, um etwaige Beschädigungen zu verhindern.

Eine andere Weiterbildung des Geräts besteht darin, dass die Geräte-Fluidschnittstelle so ausgebildet ist, dass sie in einem ungekoppelten Zustand fluiddicht ist. Auf diese Weise kann verhindert werden, dass Brennstofffluid aus dem Gerät entweicht, wenn keine Tankpatrone angeschlossen ist.

Eine andere Weiterbildung des Geräts besteht darin, dass die wenigstens eine Geräte-Fluidschnittstelle integral mit der wenigstens einen Geräte-Halteschnittstelle ausgebildet ist. Dadurch können die Geräte-Fluidschnittstelle und die Geräte-Halteschnittstelle als Einheit ausgebildet sein, so dass eine kompakte Anordnung erzielt werden kann, was insbesondere auch für kleine Geräte und/oder Tankpatronen vorteilhaft eingesetzt werden kann.

Eine andere Weiterbildung des Geräts besteht darin, dass es weiterhin wenigstens eine Geräte-Elektronikschnittstelle umfasst, die mit wenigstens einer Tankpatronen-Elektronikschnittstelle koppelbar ist, und derart ausgebildet ist, dass im Kopplungszustand eine elektrische Verbindung zwischen der Tankpatrone und dem Gerät und/oder der Brennstoffzelleneinrichtung realisiert ist. Auf diese Weise können zum Einen Informationen zwischen der Tankpatrone und dem Gerät und/oder der Brennstoffzelleneinrichtung ausgetauscht werden. Solche Informationen können etwa den Füllstand der Tankpatrone betreffen. Zum Anderen kann aber auch eine möglicherweise in der Tankpatrone vorhandene Pumpeinrichtung mit Strom versorgt werden.

Eine andere Weiterbildung des Geräts besteht darin, dass die wenigstens eine Geräte-Elektronikschnittstelle integral mit der wenigstens einen Geräte-Fluidschnittstelle und/oder der wenigstens einen Geräte-Halteschnittstelle ausgebildet ist. Dadurch können die Geräte-Elektronikschnittstelle und die wenigstens eine Geräte-Fluidschnittstelle und/oder die wenigstens eine Geräte-Halteschnittstelle als Einheit ausgebildet sein, so dass eine kompakte Anordnung erzielt werden kann, was insbesondere auch für kleine Geräte und/oder Tankpatronen vorteilhaft eingesetzt werden kann.

Eine andere Weiterbildung des Geräts besteht darin, dass die Halteverbindung zwischen der Tankpatrone und dem Gerät durch mechanische und/oder magnetische Kräfte realisiert ist. Auf diese Weise kann die Halteverbindung einfach realisiert werden, indem etwa durch mechanisches Einrasten der Tankpatronen-Halteschnittstelle mit der Geräte-Halteschnittstelle eine Kopplung hergestellt wird. Eine andere Möglichkeit ist die Realisierung der Halteverbindung durch magnetische Kräfte.

Die verschiedenen Weiterbildungen lassen sich unabhängig voneinander einsetzen oder geeignet miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

Fig. 1 zeigt eine erste Ausführungsform einer erfindungsgemäßen Tankpatrone.
Fig. 2 zeigt eine erste Ausführungsform eines erfindungsgemäßen Geräts.
Fig. 3 zeigt eine weitere Ausführungsform einer erfindungsgemäßen Tankpatrone mit integral ausgebildeter Fluid- und Halteschnittstelle.
Fig. 4 zeigt eine weitere Ausführungsform einer erfindungsgemäßen Tankpatrone mit Elektronikschnittstelle.
Fig. 5 zeigt eine Schnittansicht eines erfindungsgemäßen Geräts mit einer angeschlossenen erfindungsgemäßen Tankpatrone.
Fig. 6 zeigt einen tragbaren Computer mit drehbar angeschlossener Tankpatrone.

### Beschreibung der Ausführungsformen

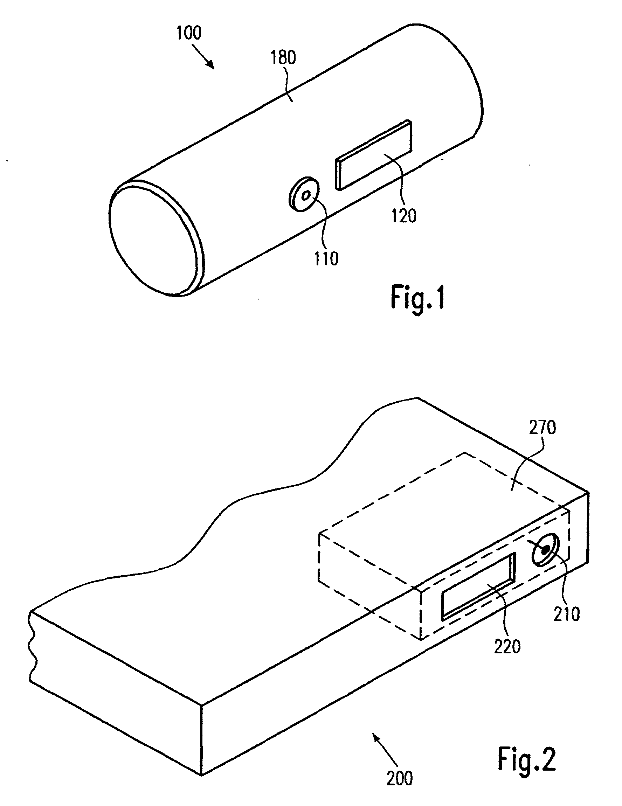

Fig. 1 zeigt eine erste Ausführungsform einer erfindungsgemäßen Tankpatrone 100. Die Tankpatrone 100 besteht aus einem Fluidbehälter 180, worin sich das Brennstofffluid für eine Brennstoffzelle befindet. An einer Seite der Tankpatrone 100 ist eine Tankpatronen-Fluidschnittstelle 110 und daneben eine Tankpatronen-Halteschnittstelle 120 angeordnet. Diese Seite ist dem Gerät in angeschlossenem Zustand zugewandt. Die Schnittstellen sind dabei komplementär zu entsprechenden Schnittstellen des Geräts ausgestaltet, die im Zusammenhang mit Fig. 2 beschrieben werden.

Die Komplementarität der Tankpatronen- und Geräte-Schnittstellen ist dabei im Sinne einer "Stecker-Steckdose"-Ausführung zu verstehen. Die Tankpatronen-Halteschnittstelle 120 ist hier als Vorsprung ausgebildet, der in eine entsprechende Vertiefung einer Geräte-Halteschnittstelle passt.

Fig. 2 zeigt eine erste Ausführungsform eines erfindungsgemäßen Geräts 200. Am Gehäuse 290 des Geräts 200 ist eine Geräte-Fluidschnittstelle 210 und eine Geräte-Halteschnittstelle 220 angeordnet, und zwar auf eine solche Weise, dass die Tankpatrone 100 nach Fig. 1 daran angeschlossen werden kann, um ein Brennstoffzelleneinrichtung 270 mit Brennstofffluid aus der Tankpatrone zu versorgen. Dazu sind die sich entsprechenden Geräte-Schnittstellen 210, 220 und die Tankpatronen-Schnittstellen 110, 120 komplementär zueinander ausgebildet, wie bereits in der Beschreibung zu Fig. 1 ausgeführt. Weiterhin entspricht die räumliche Anordnung der Geräte-Schnittstellen 210, 220 derjenigen der Tankpatronen-Schnittstellen 110, 120, so dass sie aneinander gekoppelt werden können.

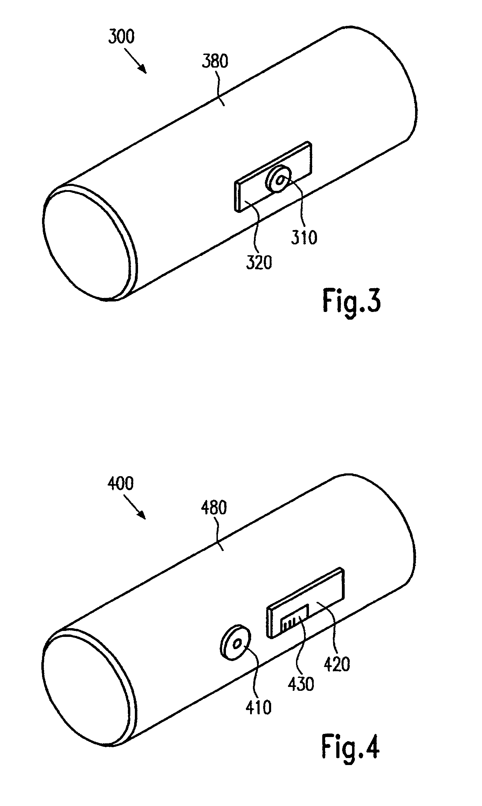

Fig. 3 zeigt eine weitere Ausführungsform einer erfindungsgemäßen Tankpatrone 300. Die Tankpatrone 300 umfasst in dieser Ausführungsform eine Tankpatronen-Fluidschnittstelle 310 und eine Tankpatronen-Halteschnittstelle 320, die integral, also als Einheit, ausgebildet sind. Die entsprechenden zugehörigen Geräte-Schnittstellen (nicht dargestellt) sind in diesem Fall auch integral als Einheit ausgebildet.

Fig. 4 zeigt eine weitere Ausführungsform einer erfindungsgemäßen Tankpatrone 400. Diese Ausführungsform umfasst eine Tankpatronen-Elektronikschnittstelle 430 mit elektrischen Kontakten, so dass Informationen zwischen der Tankpatrone 400 und einem Gerät mit entsprechender Geräte-Elektronikschnittstelle, an das diese Tankpatrone angeschlossen wird, ausgetauscht werden können. Die Tankpatronen-Elektronikschnittstelle 430 ist hier nur beispielhaft integral mit der Tankpatronen-Halteschnittstelle 420 ausgebildet. Weitere Möglichkeiten sind, die Tankpatronen-Elektronikschnittstelle 430 integral mit der Tankpatronen-Fluidschnittstelle 410 oder als separate Schnittstelle auszubilden.

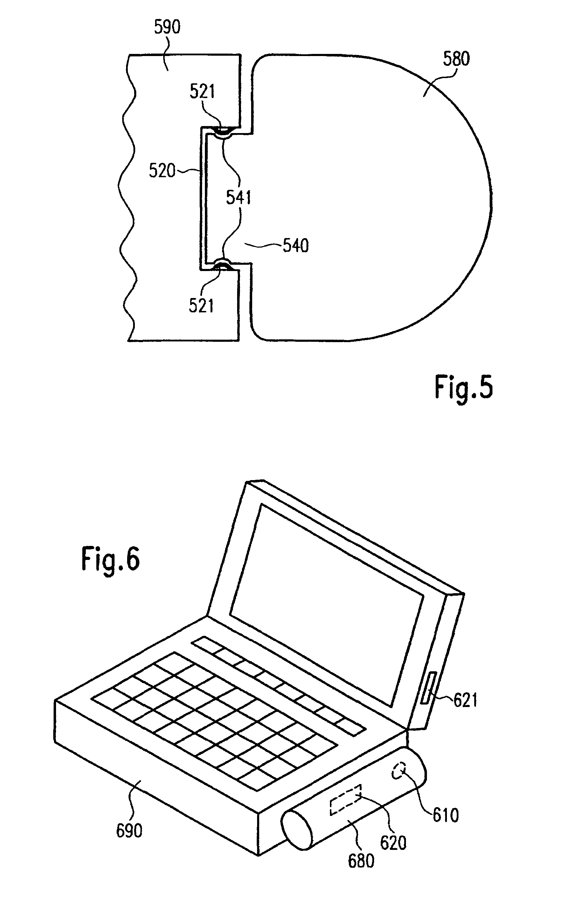

Fig. 5 zeigt ein erfindungsgemäßes Gerät 590 mit einer angeschlossenen erfindungsgemäßen Tankpatrone 580. Diese Zeichnung verdeutlicht eine mögliche Ausführung für eine Tankpatronen-Halteschnittstelle 540 und eine Geräte-Halteschnittstelle 520. Dabei umfasst die Tankpatronen-Halteschnittstelle 540 Vertiefungen 541 in die in angekoppeltem Zustand mit Federelementen 521 einrasten, wodurch eine Halteverbindung mit einer bestimmten Stärke hergestellt wird. Durch Einstellen der Federkraft lässt sich dadurch eine derartige Halteverbindung realisieren, dass sich die Halteverbindung bei einer vorbestimmten relativen Kraftwirkung zwischen der Tankpatronen-Halteschnittstelle 540 und der Geräte-Halteschnittstelle 520 löst.

Fig. 6 zeigt einen tragbaren Computer 690 mit drehbar angeschlossener Tankpatrone 680. In dieser Ausführungsform kann die Tankpatrone 680 je nach Bedarf und Platzgegebenheiten in einer waagerechten Position oder in einer senkrechten Position gehalten werden. Dazu sind an dem tragbaren Computer 690 zwei Geräte-Halteschnittstellen 620 und 621 angeordnet, wovon jeweils eine verwendet wird. In diesem Fall ist es vorteilhaft, wenn die Geräte-Fluidschnittstelle 610 kreisförmig ausgebildet ist und somit ein einfaches Drehen um deren Mittelpunkt erlaubt.

## Patentansprüche

1. Tankpatrone (100; 300; 400; 580; 680) für ein Brennstofffluid zum externen Anschließen an ein Gerät (200; 590; 690) mit einer Brennstoffzelleneinrichtung (270), umfassend:
wenigstens eine Tankpatronen-Fluidschnittstelle (110; 310; 410), die mit wenigstens einer Geräte-Fluidschnittstelle (210; 610) des Geräts koppelbar ist, und derart ausgebildet ist, dass im Kopplungszustand eine Fluidverbindung zwischen der Tankpatrone (100; 300; 400; 580; 680) und der Brennstoffzelleneinrichtung (270) realisiert ist, so dass die Brennstoffzelleneinrichtung (270) mit Brennstofffluid aus der Tankpatrone (100; 300; 400; 580; 680) versorgt werden kann, und
wenigstens eine Tankpatronen-Halteschnittstelle (120; 320; 420; 540), die mit wenigstens einer Geräte-Halteschnittstelle (220; 620, 621) des Geräts (200; 580; 690) koppelbar ist, und derart ausgebildet ist, dass im Kopplungszustand eine Halteverbindung zwischen der Tankpatrone (100; 300; 400; 580; 680) und dem Gerät (200; 590; 690) realisiert ist, so dass die Tankpatrone (100; 300; 400; 580; 680) extern am Gerät (200; 590; 690) gehalten wird.

2. Tankpatrone für ein Brennstofffluid nach Anspruch 1, in welcher die Tankpatronen-Halteschnittstelle so ausgebildet ist, dass sich die Halteverbindung bei einer vorbestimmten relativen Kraftwirkung zwischen der wenigstens einen Tankpatronen-Halteschnittstelle und der wenigstens einen Geräte-Halteschnittstelle löst.

3. Tankpatrone für ein Brennstofffluid nach Anspruch 1 oder 2, in welcher die Tankpatronen-Fluidschnittstelle so ausgebildet ist, dass sie in einem ungekoppelten Zustand fluiddicht verschlossen ist.

4. Tankpatrone für ein Brennstofffluid nach einem der Ansprüche 1-3, in welcher die wenigstens eine Tankpatronen-Fluidschnittstelle integral mit der wenigstens einen Tankpatronen-Halteschnittstelle ausgebildet ist.

5. Tankpatrone für ein Brennstofffluid nach einem der Ansprüche 1-4, weiterhin umfassend wenigstens eine Tankpatronen-Elektronikschnittstelle (430), die mit wenigstens einer Geräte-Elektronikschnittstelle koppelbar ist, und derart ausgebildet ist, dass im Kopplungszustand elektrische Verbindungen zwischen der Tankpatrone und dem Gerät und/oder der Brennstoffzelleneinrichtung bestehen.

6. Tankpatrone für ein Brennstofffluid nach Anspruch 5, in welcher die wenigstens eine Tankpatronen-Elektronikschnittstelle integral mit der wenigstens einen Tankpatronen-Fluidschnittstelle und/oder der wenigstens einen Tankpatronen-Halteschnittstelle ausgebildet ist.

7. Tankpatrone für ein Brennstofffluid nach einem der Ansprüche 1-6, in welcher die Halteverbindung zwischen der Tankpatrone und dem Gerät durch mechanische und/oder magnetische Kräfte realisiert ist.

8. Tankpatrone für ein Brennstofffluid nach einem der Ansprüche 1-7, wobei die Tankpatrone eine abgerundete, vorzugsweise eine im Wesentlichen zylindrische, äußere Form hat oder/und eine auch ebene Flächen umfassende äußere Form hat, bei der die Übergänge zwischen den Flächen erheblich abgerundet sind.

9. Tankpatrone für ein Brennstofffluid nach Anspruch 8, wobei die im Wesentlichen zylindrische Tankpatrone derart an das Gerät angeschlossen werden kann, dass sie im Wesentlichen waagerecht oder im Wesentlichen senkrecht zur Standfläche des Geräts ist, vorzugsweise zwischen diesen Positionen drehbar ist, und/oder dass sie direkt am Gerät anliegt oder ein Freiraum zwischen Tankpatrone und Gerät besteht.

10. Gerät (200; 590; 690) mit einer Brennstoffzelleneinrichtung (270), an das eine Tankpatrone (100; 300; 400; 580; 680) mit einem Brennstofffluid extern anschließbar ist, umfassend:
wenigstens eine Geräte-Fluidschnittstelle (210), die mit wenigstens einer Tankpatronen-Fluidschnittstelle (110; 310; 410) der Tankpatrone (100; 300; 400; 580; 680) koppelbar ist, und derart ausgebildet ist, dass im Kopplungszustand eine Fluidverbindung zwischen der Tankpatrone (100; 300; 400; 580; 680) und der Brennstoffzelleneinrichtung (270) realisiert ist, wodurch die Brennstoffzelleneinrichtung (270) mit Brennstofffluid aus der Tankpatrone (100; 300; 400; 580; 680) versorgt werden kann, und
wenigstens eine Geräte-Halteschnittstelle (220), die mit wenigstens einer Tankpatronen-Halteschnittstelle (120; 320; 420; 540) der Tankpatrone (100; 300; 400; 580; 680) koppelbar ist, und derart ausgebildet ist, dass im Kopplungszustand eine Halteverbindung zwischen der Tankpatrone (100; 300; 400; 580; 680) und dem Gerät (200; 590; 690) realisiert ist, wodurch die Tankpatrone (100; 300; 400; 580; 680) extern am Gerät (200; 590; 690) gehalten wird.

11. Gerät mit einer Brennzoffzelleneinrichtung nach Anspruch 10, in welchem die Geräte-Halteschnittstelle so ausgebildet ist, dass sich die Halteverbindung bei einer vorbestimmten relativen Kraftwirkung zwischen der wenigstens einen Tankpatronen-Halteschnittstelle und der wenigstens einen Geräte-Halteschnittstelle löst.

12. Gerät mit einer Brennzoffzelleneinrichtung nach Anspruch 10 oder 11, in welchem die Geräte-Fluidschnittstelle so ausgebildet ist, dass sie in einem ungekoppelten Zustand fluiddicht ist.

13. Gerät mit einer Brennzoffzelleneinrichtung nach einem der Ansprüche 10-12, in welchem die wenigstens eine Geräte-Fluidschnittstelle integral mit der wenigstens einen Geräte-Halteschnittstelle ausgebildet ist.

14. Gerät mit einer Brennzoffzelleneinrichtung nach einem der Ansprüche 10-13, weiterhin umfassend wenigstens eine Geräte-Elektronikschnittstelle, die mit wenigstens einer Tankpatronen-Elektronikschnittstelle koppelbar ist, und derart ausgebildet ist, dass im Kopplungszustand eine elektrische Verbindung zwischen der Tankpatrone und dem Gerät und/oder der Brennstoffzelleneinrichtung realisiert ist.

15. Gerät mit einer Brennzoffzelleneinrichtung nach Anspruch 14, in welchem die wenigstens eine Geräte-Elektronikschnittstelle integral mit der wenigstens einen Geräte-Fluidschnittstelle und/oder der wenigstens einen Geräte-Halteschnittstelle ausgebildet ist.

16. Gerät mit einer Brennzoffzelleneinrichtung nach einem der Ansprüche 10-15, wobei die Halteverbindung zwischen der Tankpatrone und dem Gerät durch mechanische und/oder magnetische Kräfte realisiert ist.
